# EUROPÄISCHE PATENTSCHRIFT

(11) **EP 1 220 770 B1**
(45) Veröffentlichungstag und Bekanntmachung des Hinweises auf die Patenterteilung: **30.11.2005**
(21) Anmeldenummer: 00958192.7
(22) Anmeldetag: 02.08.2000
(51) Int. Cl.: B60T 8/00, B60R 16/02

(54) **ANORDNUNG UND VERFAHREN ZUR DURCHFÜHRUNG EINER ELEKTRONISCHEN STEUERUNG BZW. REGELUNG**
SYSTEM AND METHOD FOR CARRYING OUT AN ELECTRONIC CONTROL OR REGULATION
SYSTEME ET DISPOSITIF POUR COMMANDE OU REGULATION ELECTRONIQUE

(30) Priorität: 29.09.1999 DE 19946774
(43) Veröffentlichungstag der Anmeldung: 10.07.2002
(73) Patentinhaber: ROBERT BOSCH GMBH, 70442 Stuttgart (DE)
(72) Erfinder: SCHENK, Joachim, D-38536 Meinersen-Ohof (DE); BLUME, Georg, D-71570 Oppenweiler (DE); GIEHLER, Elmar, D-71706 Markgroeningen (DE); SCHMIDT, Frank, D-71665 Vaihingen/Enz (DE)
(86) Internationale Anmeldenummer: PCT/DE2000/002547
(87) Internationale Veröffentlichungsnummer: WO 2001/023233

(56) Entgegenhaltungen:
- DE-A- 4 422 951
- US-A- 5 255 962
- US-A- 5 895 434
- WREDE J ET AL: "BRAKE BY WIRE FOR COMMERCIAL VEHICLES" SAE TRANSACTIONS,SOCIETY OF AUTOMOTIVE ENGINEERS, INC., WARRENDALE, PA,US, Bd. 101, Nr. 922489, 1. Januar 1992 (1992-01-01), Seiten 849-859, XP000473008 ISSN: 0096-736X

## Beschreibung

Die vorliegende Erfindung betrifft eine Anordnung zur Durchführung einer elektronischen Steuerung bzw. Regelung nach dem Oberbegriff des Patentanspruchs 1. Die Erfindung betrifft ferner ein entsprechendes Verfahren.

Bei der Kraftfahrzeugregelung werden verschiedene Funktionen typischerweise mittels unterschiedlicher Reglereinrichtungen, welche jeweils individuell angepaßte Steuergeräte aufweisen, durchgeführt. Als Beispiels seien ABS- und/oder FDR-Regeleinrichtungen genannt. Es wird angestrebt, universell einsetzbare Steuergeräte zu verwenden, welche im Rahmen von unterschiedlichen Funktionen einsetzbar sind. An die einzelnen Steuergeräte sind beispielsweise geeignete Aktoren und/oder Sensoren angeschlossen, welche ihrerseits eine Elektronik aufweisen.

Als weiteres Beispiel sei ein Fensterhebermotor mit integrierter Einklemmschutzelektronik genannt. Die Anbindung der Aktoren bzw. Sensoren an die jeweiligen Steuergeräte erfolgt durch spezifische Schnittstellen, welche im allgemeinen durch geeignete Treiberschaltungen innerhalb des Steuergerätes realisiert sind. Herkömmlicherweise verwendete Steuergeräte weisen ferner weitere Bauteile, wie etwa Mikrocontroller, Spannungsregler und Speicher auf.

In der DE 37 38 915 A1 ist ein universell einsetzbares Steuergerät für Regeleinrichtungen offenbart. Dabei wird ein Universalsteuergerät eingesetzt, welches erst nach der Montage aufgrund eines äußeren Befehls feststellt, welche Systemauslegung vorliegt, um diese dann abzuspeichern. Bei einem derartigen Universalsteuergerät wird als nachteilig angesehen, daß es zur Gewährleistung einer größeren Anzahl von Steuerfunktionen entsprechend ausgebildete Schaltungsteile und individualisierte Schnittstellen aufweisen muß, über welche beispielsweise Sensoren oder Aktoren mit dem Steuergerät zusammenwirken können. Die Integration derartiger variantenbestimmender Schaltungsteile und Schnittstellen in einem Steuergerät erweist sich als relativ aufwendig. Ferner bauen derartige Universalsteuergeräte aufgrund der Notwendigkeit einer Vielzahl von Anschlüssen relativ groß.

Aus der DE 42 03 704 A1 ist die Verwendung mehrerer Steuergeräte bekannt, welche über einen Bus kommunizieren. Dabei werden beispielsweise in einem Fahrzeug mehrere im Hardwareaufbau gleiche elektronische Steuergeräte verbaut, deren spezifische Funktionen erst von außen, je nach ihrer konkreten Anwendung, festgelegt werden. Diese Druckschrift betrifft insbesondere ein Verfahren zur Initialisierung derartiger Steuergeräte.

Daneben beschreibt die Veröffentlichung 'BRAKE BY WIRE FOR COMMERCIAL VEHICLES' XP000473008, ISSN 0096-736X von Wrede et al unter anderem ein elektronisch kontrolliertes Bremssystem (ELB), welches eine zentrale elektronische Steuereinheit (ECU) aufweist. Diese Steuereinheit ist unter anderem mit einem Bremswertsensor und, über einen CAN-Bus, mit Druckregelungsmodulen verbunden, welche ihrerseits Bremszylinder beaufschlagen. Bei dem Steuergerät ELB-ECU handelt es sich um ein an konkrete Anforderungen, nämlich die elektronische Bremssteuerung, angepasstes Steuergerät. Dabei erfordert eine Auswechslung bzw. Veränderung der Druckregelungsmodule entsprechende Hardware-Änderungen innerhalb des Steuergeräts ELB-ECU.

Aufgabe der Erfindung ist somit die Schaffung einer Bordarchitektur für Kraftfahrzeuge, bei welcher auch zur Realisierung unterschiedlicher Regel- bzw. Steuerfunktionen weitgehend standardisierte Steuergeräte verwendet werden können, um so beispielsweise Kosteneinsparungen und hohe Flexibilität beim Einsatz derartiger Steuergeräte zu gewährleisten. Ziel ist es das Steuergerät an unterschiedliche Einsatzzwecke anzupassen, ohne dass hierzu das Steuergerät selbst angepasst werden muss.

Diese Aufgabe wird gelöst durch eine Anordnung mit den Merkmalen des Patentanspruchs 1 und ein Verfahren mit den Merkmalen des Patentanspruchs 6.

Erfindungsgemäß sind nun auch zur Realisierung komplexer zu steuernder Systeme weitgehend Standardsteuergeräte verwendbar, welche mittels ausgelagerter variantenbestimmender Schaltungsteile für konkrete Steuerungsfunktionen individualisierbar sind. Erfindungsgemäß ist eine hohe Flexibilität bei der Konzeption von Bordnetzarchitekturen realisierbar, da beispielsweise bei Veränderung bzw. Austausch eines mit einem Steuergerät wechselwirkenden Aktors bzw. Sensors keine Harwareänderung innerhalb des Steuergerätes notwendig ist. Als variantenbestimmende Schaltungsteile werden hierbei insbesondere Treiberschaltungen bzw. -module verstanden, welche die Art des jeweils anschließbaren Aktors bzw. Sensors festlegen.

Erfindungsgemäß weisen die Schnittstellen einen standardisierten Teilabschnitt, welcher in oder an dem Steuergerät ausgebildet ist, und einen individualisierten Teilabschnitt, welcher bezüglich des Steuergerätes ausgelagert ausgebildet ist, auf. Durch diese Maßnahme ist ein im wesentlichen vollständig standardisiertes Steuergerät zur Verfügung gestellt, welches durch Verbindung mit entsprechenden individualisierten Schnittstellenteilabschnitten bzw. variantenbestimmenden Schaltungsteilen wie etwa Leistungstreiber usw. individualisiert werden kann.

Vorteilhafte Ausgestaltungen der Erfindung sind Gegenstand der Unteransprüche.

Es ist bevorzugt, daß die Steuergeräte skalierbar bezüglich der Anzahl ihrer Schnittstellen, ihrer Rechenleistung und/oder ihrer Speicherkapazität ausgebildet sind. Durch diese Maßnahme ist in einfacher Weise beispielsweise eine Anpassung an die Steuererfordernisse eines Kleinwagens, welcher typischerweise etwa zwanzig Steuergeräteingänge bzw. -ausgänge benötigt, oder an diejenigen eines aufwendigeren Fahrzeuges, bei welchem etwa achtzig derartige Eingänge bzw. Ausgänge notwendig sind, realisierbar.

Gemäß einer weiteren bevorzugten Ausgestaltung der erfindungsgemäßen Anordnung ist der individualisierte Teilabschnitt der jeweiligen Schnittstellen und/oder der variantenbestimmende Schaltungsteil innerhalb eines das Steuergerät mit einem Aktor bzw. Sensor verbindenden Kabelbaumes angeordnet. Durch diese Maßnahme können zur Anpassung eines Steuergeräts an Aktoren bzw. Sensoren individualisierte Kabelbäume verwendet werden, wodurch sich der Bereitstellungsaufwand für das eigentliche Steuergerät vermindert. Es ist gemäß einer weiteren bevorzugten Ausgestaltung möglich, den individualisierten Teilabschnitt der Schnittstellen in oder an einem Sensor bzw. Aktor zweckmäßigerweise vorzusehen. Zu diesem Zweck ist der Sensor bzw. Aktor mit entsprechenden Steckern ausbildbar.

Gemäß einer besonders bevorzugten Ausführungsform der erfindungsgemäßen Anordnung sind wenigstens zwei Steuergeräte vorgesehen, welche über eine Multiplexleitung miteinander verbunden sind. Über eine derartige Multiplexleitung sind unterschiedliche Steuergeräte in einfacher und effektiver Weise miteinander verbindbar.

Die Erfindung wird nun anhand der beigefügten Zeichnungen weiter beschrieben. In dieser zeigt
Figur 1 eine blockschaltbildartige Darstellung zur Erläuterung einer herkömmlichen Bordnetzarchitektur,
Figur 2 eine blockschaltbildartige Ansicht einer weiteren herkömmlichen Bordnetzarchitektur,
Figur 3 eine blockschaltbildartige Darstellung einer bevorzugten Ausführungsform der erfindungsgemäßen Anordnung, und
Figur 4 eine weitere blockschaltbildartige Darstellung zur Erläuterung der vorliegenden Erfindung im Vergleich zum Stand der Technik.

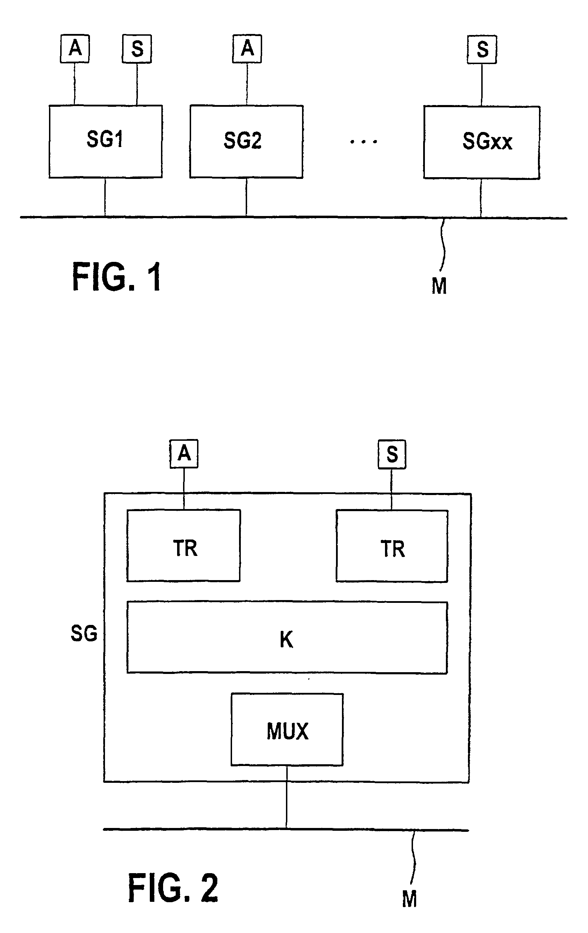

In Figur 1 ist eine Bordnetzarchitektur schematisch dargestellt, wie sie zur Zeit typischerweise Verwendung findet. Hierbei sind unterschiedliche Steuergeräte SG1, SG2, SGxx vorgesehen, welche jeweils mit Aktoren bzw. Sensoren, welche mit A bzw. S bezeichnet sind, wechselwirken. Die Aktoren bzw. Sensoren und die ihnen jeweils zugeordneten Steuergeräte dienen zur Realisierung verschiedener Bordfunktionen. In neueren Fahrzeuggenerationen sind diese Steuergeräte typischerweise durch ein geeignetes Multiplexsystem bzw. eine Multiplexleitung M miteinander verbunden.

Die Aktoren und/oder Sensoren A, S können ihrerseits wiederum eine Elektronik beinhalten, als Beispiel sei ein Fensterhebermotor mit integrierter Einklemmschutzelektronik genannt. Die Anbindung der Aktoren oder Sensoren an die jeweiligen Steuergeräte SG erfolgt durch spezifische Schnittstellen, welche im allgemeinen durch geeignete Treiberschaltungen TR innerhalb des Steuergerätes realisiert sind, wie in Figur 2 dargestellt ist. Figur 2 zeigt insgesamt den inneren Aufbau eines Steuergerätes SG. Zusätzlich zu den erwähnten Treiberschaltungen TR erkennt man einen Steuergerätekern K und eine Multiplex-Schnittstelle MUX. Der Steuergerätekern K beinhaltet beispielsweise einen Mikrocontroller, Spannungsregler und Speicher.

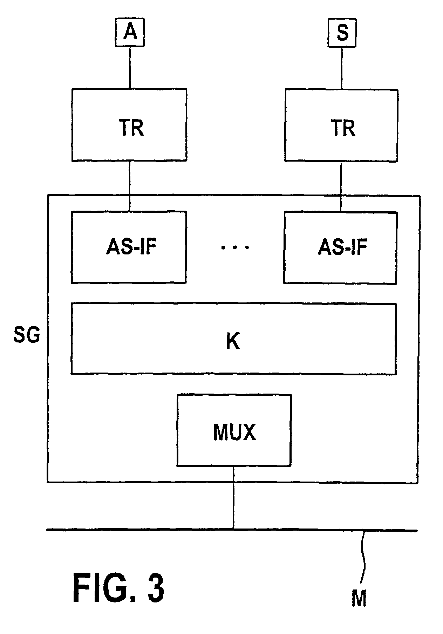

In Figur 3 ist eine bevorzugte Ausführungsform eines im Rahmen der erfindungsgemäßen Anordnung verwendbaren Steuergeräts dargestellt. Gleiche oder ähnliche Komponenten, wie sie bereits unter Bezugnahme auf den Stand der Technik eingeführt wurden, sind mit gleichem Bezugsbuchstaben bezeichnet.

Man erkennt, daß im Gegensatz zu dem in Figur 2 dargestellten Steuergerät erfindungsgemäß die variantenbestimmenden Schaltungsteile, d.h. die zwischen Steuergerät und Aktor bzw. Sensor angeordneten Leistungstreiber TR, aus dem Steuergerät SG ausgelagert ausgebildet sind. Die Treibermodule TR sind hierbei jeweils über eine Aktor/Sensor-Schnittstelle AS-IF an das Steuergerät SG angeschlossen. Betrachtet man die Treibermodule TR und die Schnittstellen AS-IF insgesamt als Schnittstellen zwischen einem Aktor bzw. Sensor und dem Steuergerät, stellt das Treibermodul TR jeweils einen variantenbestimmenden bzw individualisierten Schnittstellenteilabschnitt, und die Schnittstelle AS-IF einen standardisierten Schnittstellenteilabschnitt dar.

Das Steuergerät SG kann bezüglich der Anzahl der Schnittstellen sowie seiner Rechenleistung und seiner Speicherkapazität etc. skalierbar ausgebildet sein.

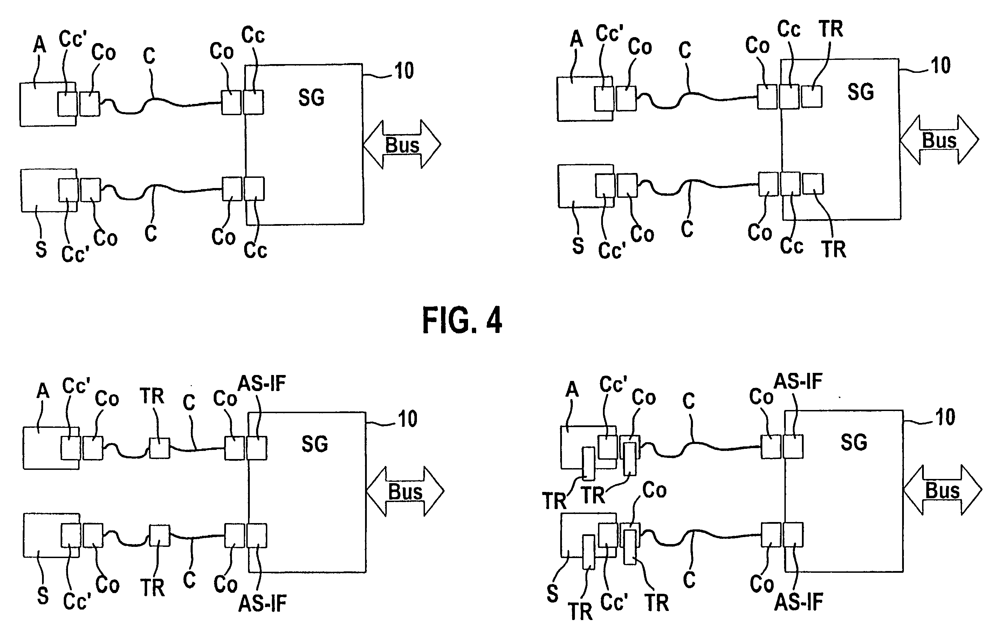

Anhand der Darstellung der Figur 4 werden noch einmal bevorzugte Ausgestaltungen der erfindungsgemäßen Anordnung einer bekannten Anordnung gemäß dem Stand der Technik gegenübergestellt. Ferner soll das erfindungsgemäße Verfahren anhand dieser Figur erläutert werden.

Figur 4, links oben, zeigt eine Anordnung zur Durchführung einer elektronischen Steuerung bzw. Regelung gemäß dem Stand der Technik. Hierbei ist ein Steuergerät SG auf einer (nicht im einzelnen dargestellten) Leiterplatte innerhalb eines Standardgehäuses 10 realisiert. Das Steuergerät SG ist mit Treibern ausgebildet, welche ebenfalls nicht im einzelnen dargestellt sind. Die Treiber sind gemäß dieser Anordnung gemäß dem Stand der Technik durch entsprechende Schaltungen auf der Leiterplatte realisiert. Die in das Steuergerät SG integrierten Treiber sind über jeweilige Kabel bzw. Kabelbäume C mit einem Aktor A bzw. einem Sensor S verbunden. Die Kabelbäume C sind hierbei an ihren jeweiligen Enden mit Steckern Co ausgebildet, welche einerseits mit den Treibern (über Gegenstrecker Cc), und andererseits mit dem Aktor A bzw. Sensor S (über Gegenstrecker Cc') zusammenwirken. Mittels des Doppelpfeiles ist angedeutet, daß weitere Steuergeräte SG über einen entsprechenden Bus mit dem dargestellten Steuergerät verbindbar sind.

In Figur 4, rechts oben ist ein erster Schritt zur Standardisierung der Anordnung durch Bildung von Schaltungsmodulen schematisch dargestellt. D.h., die Treiberschaltungen sind hier modulartig ausgebildet (Treibermodule TR) und bilden, zusammen mit den entsprechenden Gegensteckern Cc für die Stecker Co der Kabelbäume Schnittstellen des Steuergerätes SG für den Aktor A bzw. den Sensor S.

In Figur 4, links unten ist rein schematisch eine erste bevorzugte Ausführungsform der erfindungsgemäßen Anordnung dargestellt. Man erkennt, daß die variantenbestimmenden Schaltungsteile, d.h. die Treibermodule TR, bezüglich des Steuergerätes SG in die jeweiligen Kabelbäume C zwischen Steuergerät und Aktor bzw. Sensor ausgelagert sind. Im Steuergerät SG verbleiben lediglich die Schnittstellen AS-IF sowie der hier nicht dargestellte Steuergerätekern (siehe auch Figur 2).

Zur Verbindung des Aktors A bzw. des Sensors S mit dem Steuergerät SG sind die jeweils mit einem Treibermodul TR ausgebildeten Kabelbäume C wiederum mit entsprechenden Steckern Co ausgebildet.

In Figur 4, rechts unten, ist eine weitere bevorzugte Ausführungsform der erfindungsgemäßen Anordnung dargestellt. Auch hier sind, ähnlich wie in der unmittelbar vorbeschriebenen Ausführungsform, die Treibermodule TR bezüglich des Steuergerätes SG ausgelagert. Gemäß dieser Ausführungsform sind die Treibermodule TR in den sensor- bzw. aktorseitigen Steckern Co und/oder innerhalb des Sensors S bzw. Aktors A ausgebildet. Es sei zu verstehen gegeben, daß diese Ausbildung von je zwei Treibermodulenelementen TR sowohl für den Aktor als auch den Sensor lediglich beispielhaft angegeben ist. Eine derartige Ausgestaltung kann beispielsweise dadurch realisiert sein, daß sowohl in dem Aktor bzw. dem Sensor als auch in dem jeweils zugeordneten Stecker Co nur jeweils ein Teil des Treibermoduls vorgesehen ist. Es ist gemäß einer weiteren, nicht dargestellten Variation dieser Ausführungsform möglich, ausschließlich in dem Aktor bzw. Sensor, oder auch ausschließlich in dem aktorseitigen bzw. sensorseitigen Stecker Co ein derartiges Treibermodul vorzusehen.

Das erfindungsgemäße Verfahren wird nun (vereinfacht) unter Bezugnahme auf Figur 4, rechts unten, beschrieben. Über den Sensor S wird eine Meßgröße empfangen und in ein Sensorsignal umgewandelt. Das Sensorsignal wird über das als Schnittstelle dienende Treibermodul TR, welches in dem Sensor und/oder dem sensorseitigen Stecker Co integriert ist, über einen Kabelbaum C auf das Steuergerät SG gegeben. Das Steuergerät SG berechnet auf der Grundlage des Sensorsignals ein Steuersignal zum Antreiben des Aktors A. Dieses Steuersignal wird über einen weiteren Kabelbaum C und das als Steuergerät-Aktor-Schnittstelle dienende Treibermodul TR, welches in dem Aktor oder dem aktorseitigen Stecker Co integriert sein kann, auf den Aktor A gegeben. Auf der Grundlage dieses Steuersignals betätigt der Aktor eine ihm zugeordnete Funktionseinheit.

Es sei schließlich angemerkt, daß die vorliegende Erfindung sowohl im Rahmen einer Karosserieelektronik, als auch im Rahmen einer Motor- oder Bremselektroniksteuerung bzw. -regelung einsetzbar ist. Auch weitere Anwendungsgebiete, welche hier nicht im einzelnen genannt sind, sind denkbar.

## Patentansprüche

1. Anordnung zur Durchführung einer elektronischen Steuerung bzw. Regelung von Funktionen eines Kraftfahrzeugs, mit wenigstens einem elektronischen Steuergerät (SG), und wenigstens einem dem Steuergerät (SG) zugeordneten Aktor (A) und/oder Sensor (S), wobei der wenigstens eine Aktor und/oder Sensor (A, S) über eine Steuergerät-Aktor/Sensor-Schnittstelle ansteuerbar ist,
**dadurch gekennzeichnet,**
**daß** die Schnittstelle einen standardisierten Teilabschnitt (AS-IF), welcher in oder an dem Steuergerät angeordnet ist, und einen individualisierten Teilabschnitt (TR), welcher bezüglich des Steuergeräts (SG) ausgelagert ausgebildet ist, aufweist, wobei der aus dem Steuergerät ausgelagerte Teilabschnitt zwischen dem standardisierten Teilabschnitt (AS-IF) und dem Aktor und/oder Sensor (A, S) vorgesehen ist und einen variantenbestimmenden Schaltungsteil des Steuergerätes darstellt und insbesondere als Treibermodul ausgebildet ist.

2. Anordnung nach Anspruch 1, **dadurch gekennzeichnet, daß** das wenigstens eine Steuergerät (SG) skalierbar bezüglich der Anzahl seiner Schnittstellen, seiner Rechenleistung und/oder seiner Speicherkapazität ist.

3. Anordnung nach Anspruch 1 oder 2, **dadurch gekennzeichnet, daß** der individualisierte Teil der Schnittstelle und/oder der variantenbestimmende Schaltungsteile in einem das Steuergerät (SG) und den Aktor (A) bzw. Sensor (S) verbindenden Kabelbaum (C) angeordnet ist.

4. Anordnung nach einem der vorhergehenden Ansprüche, **dadurch gekennzeichnet, daß** der individualisierte Teil der Schnittstelle in oder an dem Aktor (A) oder dem Sensor (S) vorgesehen ist.

5. Anordnung nach einem der vorstehenden Ansprüche, **dadurch gekennzeichnet, daß** wenigstens zwei Steuergeräte (SG) vorgesehen sind, welche über eine Multiplexleitung (M) miteinander verbunden sind.

6. Verfahren zur Durchführung einer elektronischen Regelung oder Steuerung, insbesondere von Funktionen eines Kraftfahrzeugs, **gekennzeichnet durch** folgende Schritte:
- Bereitstellung einer Anordnung nach einem der Ansprüche 1 bis 5;
- Bereitstellung eines Sensorsignals von wenigstens einem Sensor;
- Verarbeitung des Sensorsignals mittels wenigstens eines Steuergeräts zum Erhalt eines Steuersignals, und
- Beaufschlagung wenigstens eines Aktors auf der Grundlage des erhaltenen Steuersignals.

## Claims

1. Arrangement for carrying out electronic open-loop or closed-loop control of functions of a motor vehicle, having at least one electronic control unit (SG), and at least one actuator (A) which is assigned to the control unit (SG) and/or sensor (S), wherein the at least one actuator and/or sensor (A, S) can be actuated via a control unit actuator/sensor interface, **characterized in that** the interface has a standardized section (AS-IF) which is arranged in or on the control unit and an individualized section (TR) which is embodied in an exported fashion with respect to the control unit (SG), wherein the section which is exported out of the control unit is provided between the standardized section (AS-IF) and the actuator and/or sensor (A, S) and constitutes a variant-determining circuit component of the control unit and is embodied in particular as a driver module.

2. Arrangement according to Claim 1, **characterized in that** the at least one control unit (SG) is scalable with respect to the number of its interfaces, its computing power and/or its memory capacity.

3. Arrangement according to Claim 1 or 2, **characterized in that** the individualized part of the interface and/or of the variant-determining circuit components is arranged in a cable harness (C) which connects the control unit (SG) and the actuator (A) or sensor (S).

4. Arrangement according to one of the preceding claims, **characterized in that** the individualized part of the interface is provided in or on the actuator (A) or the sensor (S).

5. Arrangement according to one of the preceding claims, **characterized in that** at least two control units (SG) are provided and are connected to one another via a multiplex line (M).

6. Method for carrying out electronic closed-loop or open-loop control, in particular of functions of a motor vehicle, **characterized by** the following steps:
- provision of an arrangement according to one of Claims 1 to 5;
- provision of a sensor signal by at least one sensor;
- processing of the sensor signal by means of at least one control unit in order to obtain a control signal, and
- actuation of at least one actuator on the basis of the control signal obtained.

## Revendications

1. Dispositif permettant d'effectuer une commande ou une régulation électronique de fonctions d'un véhicule automobile, comprenant au moins un appareil de commande électronique (SG) et au moins un actionneur (A) et/ou capteur (S) associé à l'appareil de commande (SG), au moins un actionneur et/ou capteur (A, S) pouvant être commandé par l'intermédiaire d'une interface appareil de commande - actionneur/capteur,
**caractérisé en ce que**
l'interface présente une partie standardisée (AS-IF) disposée dans l'appareil de commande ou au niveau de celui-ci, et une partie individualisée (TR) configurée de façon délocalisée par rapport à l'appareil de commande (SG), la partie délocalisée hors de l'appareil de commande étant prévue entre la partie standardisée (AS-IF) et l'actionneur et/ou capteur (A, S) et représentant une partie de circuit de l'appareil de commande déterminant des variantes et étant en particulier configurée sous forme de module pilote.

2. Dispositif selon la revendication 1,
**caractérisé en ce qu'**
au moins un appareil de commande (SG) est modulable en fonction du nombre de ses interfaces, de sa puissance de calcul et/ou de sa capacité de stockage.

3. Dispositif selon la revendication 1 ou 2,
**caractérisé en ce que**
la partie individualisée de l'interface et/ou la partie de circuit déterminant des variantes est disposée dans un faisceau de câbles (C) reliant l'appareil de commande (SG) à l'actionneur (A) ou capteur (S).

4. Dispositif selon l'une quelconque des revendications précédentes,
**caractérisé en ce que**
la partie individualisée de l'interface est prévue dans l'actionneur (A) ou le capteur (S) ou au niveau de celui-ci.

5. Dispositif selon l'une quelconque des revendications précédentes,
**caractérisé en ce qu'**
au moins deux appareils de commande (SG) sont reliés entre eux par l'intermédiaire d'une ligne multiplex (M).

6. Procédé permettant d'effectuer une régulation ou une commande électronique, en particulier pour des fonctions d'un véhicule automobile,
**caractérisé par**
les étapes suivantes :
- mise à disposition d'un dispositif selon l'une quelconque des revendications 1 à 5 ;
- mise à disposition d'un signal de capteur provenant d'au moins un capteur ;
- traitement du signal de capteur au moyen d'au moins un appareil de commande pour l'obtention d'un signal de commande ; et
- sollicitation d'au moins un actionneur sur la base du signal de commande reçu.
